# EUROPEAN PATENT APPLICATION

(11) **EP 2 557 194 A1**
(43) Date of publication of application: **13.02.2013**
(21) Application number: 11180707.9
(22) Date of filing: 09.09.2011
(51) Int. Cl.: C22C 38/18, C21D 9/46

(54) **Oxidation-resistant ferritic stainless steel, method of manufacturing the same, and fuel cell interconnector using the ferritic stainless steel**

(30) Priority: 12.08.2011 KR 20110080650
(71) Applicant: Korea Institute of Science and Technology, Seoul 136-130 (KR)
(72) Inventor: Kim, Dong-Ik, 158-753 Seoul (KR); Cho, Young Whan, 136-120 Seoul (KR); Ahn, Jae Pyoung, 137-060 Seoul (KR); Jung, Woo Sang, 135-284 Seoul (KR); Shim, Jae-Hyeok, 143-751 Seoul (KR); Suh, Jin-Yoo, 138-050 Seoul (KR); Choi, In Suk, 137-900 Seoul (KR); Lee, Young-Su, 136-130 Seoul (KR); Kim, Ju heon, 120-810 Seoul (KR)
(74) Representative: advotec.

(57) **Abstract**

An oxidation-resistant ferritic stainless steel comprising: a ferritic stainless steel comprising Cr, wherein a {110} grain orientation fraction of a surface of the ferritic stainless steel as measured using electron back scattered diffraction pattern (EBSD) is about 5% or more; and a chromium oxide layer formed on the surface of the ferritic stainless steel is provided.

## Description

### CROSS-REFERENCE TO RELATED PATENT APPLICATION

This application claims the benefit of Korean Patent Application No. 10-2011-0080650, filed on August 12, 2011, in the Korean Intellectual Property Office, the disclosure of which is incorporated herein in its entirety by reference.

### BACKGROUND OF THE INVENTION

### 1. Field of the Invention

The present invention relates to an oxidation-resistant ferritic stainless steel, a method of manufacturing the same, and a fuel cell interconnector including the oxidation-resistant ferritic stainless steel, and more particularly, to an oxidation-resistant ferritic stainless steel having a surface on which an oxide layer is formed, a method of manufacturing the same, and a fuel cell interconnector including the oxidation-resistant ferritic stainless steel.

### 2. Description of the Related Art

Ferritic stainless steels, which generally contain 11 % by weight or more of Cr, are cheaper than austenitic stainless steels and stress corrosion cracking does not occur in ferritic stainless steels due to chlorides. Due to these characteristics, demands for ferritic stainless steels have been gradually increased.

A ferritic stainless steel used in a high temperature environment, for example, as a material for boilers and pipes of power plants, exhaust pipes of vehicles, or fuel cell interconnectors, is required to have high thermal resistance and excellent oxidation resistance. Oxidation resistance of ferritic stainless steels has been improved by reducing the content of impurities such as C, N, and O and adding metallic elements such as Cr, Ni, Mo, Al, Si, and rare earth metals.

Korean Patent Application Publication No. 2010-0023009 discloses a ferritic stainless steel having excellent oxidation resistance and thermal fatigue resistance with no expensive elements, such as Mo or W, added therein. The ferritic stainless steel contains C: 0.015 mass % or lower, Si: 1.0 mass % or lower, Mn: 1.0 mass % or lower, P: 0.04 mass % or lower, S: 0.010 mass % or lower, Cr: 16 to 23 mass % or lower, N: 0.015 mass % or lower, Nb: 0.3 to 0.65 mass %, Ti: 0.15 mass % or lower, Mo: 0.1 mass % or lower, W: 0.1 mass % or lower, Cu: 1.0 to 2.5 mass %, and Al: 0.2 to 1.5 mass %, and the rest of the ferritic stainless steel is Fe and inevitable impurities. Korean Patent Application Publication No. 2006-0096989 also discloses a method of making a ferritic stainless steel article having an oxidation resistant surface, the method including: providing a ferritic stainless steel including aluminum, at least one rare earth metal, and 16 to 30% by weight of chromium, wherein the total weight of rare earth metals is greater than 0.02% by weight; and modifying at least one surface of the ferritic stainless steel such that, when subjected to an oxidizing atmosphere at a high temperature, the modified surface develops an electrically conductive, aluminum-rich, and oxidation resistant oxide layer including chromium and iron and having a hematite structure different from Fe₂O₃, alpha Cr₂O₃, and alpha Al₂O₃.

Although, since a large amount of Cu is included or Mo, Al, and rare earth metals are used according to the above-mentioned patent applications, ferritic stainless steels thereof have improved oxidation resistance, strength of the ferritic stainless steels may be reduced, processability thereof may deteriorate, or manufacturing costs therefore may increase due to the addition of oxidation resistant elements.

### SUMMARY OF THE INVENTION

The present invention provides an oxidation-resistant ferritic stainless steel having excellent oxidation resistance and high electrical conductivity by forming an oxide layer on a surface of the ferritic stainless steel by grain orientation control, a method of manufacturing the same, and a fuel cell interconnector including the oxidation-resistant ferritic stainless steel.

According to an aspect of the present invention, there is provided an oxidation-resistant ferritic stainless steel including: a ferritic stainless steel including Cr, wherein a {110} grain orientation fraction of a surface of the ferritic stainless steel as measured using electron back scattered diffraction pattern (EBSD) is about 5% or more; and a chromium oxide layer formed on the surface of the ferritic stainless steel.

The {110} grain orientation fraction may be about 30% or more.

The {110} grain orientation fraction may be about 45% or more.

A content of Cr may be in a range of about 20 to 30% by weight.

An average grain size of grains of the surface of the ferritic stainless steel may be in a range of about 5 *µ*m to about 100 *µ*m.

The chromium oxide layer formed on grains having the {110} grain orientation of the surface of the ferritic stainless steel may have the same grain orientation.

A grain orientation of the chromium oxide layer formed on grains having the {110} grain orientation of the surface of the ferritic stainless steel may be {00.1}.

The chromium oxide layer may be a Cr₂0₃ layer.

A thickness of the chromium oxide layer may be in a range of about 1 nm to about 10 *µ*m.

The oxidation-resistant ferritic stainless steel may further include a spinel oxide layer formed on the chromium oxide layer formed on grains having the {110} grain orientation of the surface of the ferritic stainless steel.

The spinel oxide layer may have a {111} grain orientation.

The spinel oxide layer may be a Cr₂Mn0₄ oxide layer.

According to another aspect of the present invention, there is provided a method of manufacturing the oxidation-resistant ferritic stainless steel, the method including:
providing a Cr-containing ferritic stainless steel having a surface that has about 5% or more of a {110} grain orientation fraction as measured using electron back scattered diffraction pattern (EBSD); and
forming a chromium oxide layer on the surface of the ferritic stainless steel by heat-treating the ferritic stainless steel at a temperature in a range of about 500°C to about 900°C for about 5 minutes to about 200 hours.

The {110} grain orientation fraction may be about 30% or more in the providing.

The {110} grain orientation fraction may be about 45% or more in the providing.

A content of Cr may be in a range of about 20 to 30% by weight in the providing.

An average grain size of grains of the surface of the ferritic stainless steel may be in a range of about 5 *µ*m to about 100 *µ*m in the providing.

The forming may be performed by heat-treating the ferritic stainless steel at a temperature in a range of about 500°C to about 900°C for about 5 minutes to about 2 hours.

According to another aspect of the present invention, there is provided a fuel cell interconnector including the oxidation-resistant ferritic stainless steel.

According to another aspect of the present invention, there is provided a fuel cell including: a unit cell including an anode, an electrolyte, and a cathode; and the fuel cell interconnector for connecting a plurality of the unit cells.

### BRIEF DESCRIPTION OF THE DRAWINGS

The above and other features and advantages of the present invention will become more apparent by describing in detail exemplary embodiments thereof with reference to the attached drawings in which:
FIG. 1 is a schematic cross-sectional view of an oxidation-resistant ferritic stainless steel with excellent oxidation resistance according to an embodiment of the present invention;
FIGS. 2A, 2B, and 2C are scanning electron microscope (SEM) images and EBSD pattern from the same site of chromium oxide layers formed on a surface of an oxidation-resistant ferritic stainless steel according to an embodiment of the present invention, according to grain orientations;
FIGS. 3A and 3B are EBSD pattern and transmission electron microscope (TEM) images of spinel oxide layers formed on chromium oxide layers of an oxidation-resistant ferritic stainless steel according to an embodiment of the present invention, according to grain orientations;
FIG. 4 schematically shows an interconnector and a fuel cell according to an embodiment of the present invention;
FIGS. 5A and 5B are graphs respectively illustrating a grain orientation fractions of surfaces of oxidation-resistant ferritic stainless steels prepared according to Example 1 and Comparative Example 1;
FIG. 6 is a graph illustrating mass gain of oxide layers of oxidation-resistant ferritic stainless steels prepared according to Example 1 and Comparative Example 1 over time at 800°C;
FIG. 7 shows photographs of oxidation-resistant ferritic stainless steels prepared according to Example 1 and Comparative Example 1 to compare oxidation degrees thereof;
FIGS. 8A and 8B are graphs respectively illustrating grain orientation fractions of surfaces of oxidation-resistant ferritic stainless steels prepared according to Example 2 and Comparative Example 2; and
FIG. 9 is a graph illustrating mass gain of oxide layers of oxidation-resistant ferritic stainless steels prepared according to Example 2 and Comparative Example 2 over time at 800°C.

### DETAILED DESCRIPTION OF THE INVENTION

Hereinafter, the present invention will now be described more fully with reference to the accompanying drawings, in which exemplary embodiments of the invention are shown.

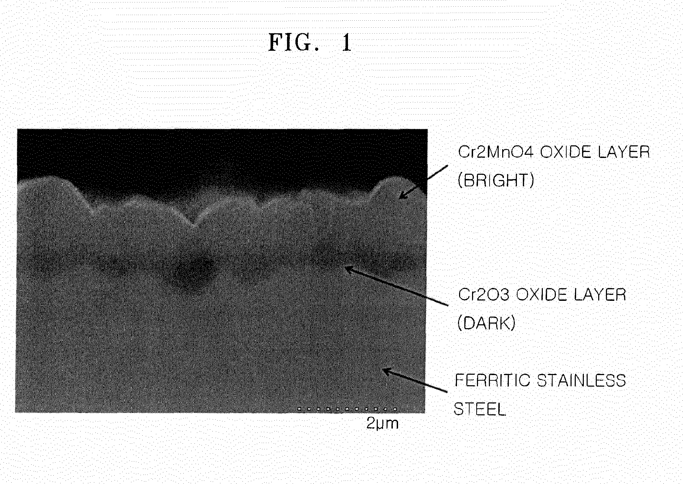

FIG. 1 is a schematic cross-sectional view of an oxidation-resistant ferritic stainless steel according to an embodiment of the present invention.

An oxidation-resistant ferritic stainless steel according to an embodiment of the present invention includes a Cr-containing ferritic stainless steel having a surface that has about 5% or more of a {110} grain orientation fraction, as measured using electron back scattered diffraction pattern (EBSD), and a chromium oxide layer.

The ferritic stainless steel includes about 20 to 30% by weight of Cr. For example, the ferritic stainless steel may include about 20 to 30% by weight of Cr, about 0.005 to 0.05% by weight of Al, about 0.01 to 0.6% by weight of Mn, about 0.005 to 0.1 % by weight of Ti, about 0.002 to 0.03% by weight of C, about 0.001 to 0.02% by weight of N, and about 0.01 to 0.2% by weight of La, and the rest of the ferritic stainless steel may be Fe and inevitable impurities, but is not limited thereto.

Cr is an element that is essential in obtaining corrosion resistance, and the ferritic stainless steel includes 20 to 30% by weight of Cr. If the content of Cr is within this range, the ferritic stainless steel may have desirable corrosion resistance, processability, and manufacturability.

The ferritic stainless steel may further include other elements as described below in addition to Cr. The ferritic stainless steel may include about 0.005 to 0.05% by weight of A1 as a deoxidizing element. If the content of A1 is within this range, desirable tenacity of the ferritic stainless steel may be obtained. The ferritic stainless steel may include about 0.01 to 0.6% by weight of Mn as a solid solution hardening element. If the content of Mn is within this range, desirable processability of the ferritic stainless steel may be obtained. The ferritic stainless steel may include about 0.005 to 0.1 % by weight of Ti, which fixes C or N, to improve softening and extensibility of the ferritic stainless steel. If the content of Ti is within this range, desirable extensibility and processability of the ferritic stainless steel may be obtained. The ferritic stainless steel may include about 0.002 to 0.03% by weight of C. If the content of C is within this range, desirable rust resistance of the ferritic stainless steel may be obtained. The ferritic stainless steel may include about 0.005 to 0.2% by weight of La as a lanthanoid rare earth element for improving oxidation resistance. If the content of La is within this range, oxidation resistance of the ferritic stainless steel may be desirable.

Grain orientations of the surface of the ferritic stainless steel may be obtained by measuring a plurality of regions having the same shape and same size that are randomly selected from the surface using EBSD. The {110} grain orientation fraction is defined as a fraction of the {110} grain orientation among all grain orientations measured from the plurality of regions randomly selected using EB SD. Also, a {100} grain orientation fraction and a {111} grain orientation fraction are respectively defined with respect to all grain orientations.

The {110} grain orientation fraction measured from the surface of the ferritic stainless steel using EBSD is about 5% or more.

The ferritic stainless steel is manufactured by using processes such as rolling and recrystallization. The surface of the ferritic stainless steel has the {110} grain orientation, the {100} grain orientation, the {111} grain orientation, and a {112} grain orientation. Although the present invention is not limited to any particular principle, if the {110} grain orientation fraction is similar to or greater than those of the {100} grain orientation and the {111} grain orientation in the surface of the ferritic stainless steel, the oxide layer has a dense structure since grains having the {110} grain orientation are mainly formed on the surface. In addition, it is identified that the density of the oxide layer decreases in the order of the {110} grain orientation > the {100} grain orientation and the {110} grain orientation > the {111} grain orientation on the surface of the ferritic stainless steel. Accordingly, the ferritic stainless steel may have a dense oxide layer by increasing the {110} grain orientation fraction in a grain plane. When the {110} grain orientation fraction measured from the surface of the ferritic stainless steel using EBSD is about 5% or more, the oxide layer has relatively high density. Preferably, the {110} grain orientation fraction may be about 30% or more, and more preferably, the {110} grain orientation fraction may be about 45% or more. For example, if the {110} grain orientation fraction is about 45% or more, the weight of the oxide layer of the oxidation-resistant ferritic stainless steel may be reduced by about 50% compared to when the {110} grain orientation fraction is about 5% or less.

In the surface of the ferritic stainless steel of the oxidation-resistant ferritic stainless steel, the fraction of the {110} grain orientation may be greater than those of the {100} grain orientation and the {111} grain orientation. Accordingly, since the {110} grain orientation forms a denser oxide layer than the {100} grain orientation and the {111} grain orientation, oxidation resistance of the ferritic stainless steel may further be increased by reducing the amount of grains having the {100} grain orientation and the {111} grain orientation and increasing the amount of grains having the {110} grain orientation.

An average grain size of grains formed on the surface of the oxidation-resistant ferritic stainless steel may be in a range of about 5 *µ*m to about 100 *µ*m. If the average grain size is within this range, grains having the {110} grain orientation, the {100} grain orientation, and the {111} grain orientation are mainly formed on the surface of the oxidation-resistant ferritic stainless steel.

The chromium oxide layer is formed on the surface of the ferritic stainless steel. The density of the chromium oxide layer having the {110} grain orientation is greater than that having the other grain orientations in the surface of the ferritic stainless steel. The chromium oxide layer may be formed by heat-treating the ferritic stainless steel at a temperature in a range of about 500°C to about 900°C for about 5 minutes or longer.

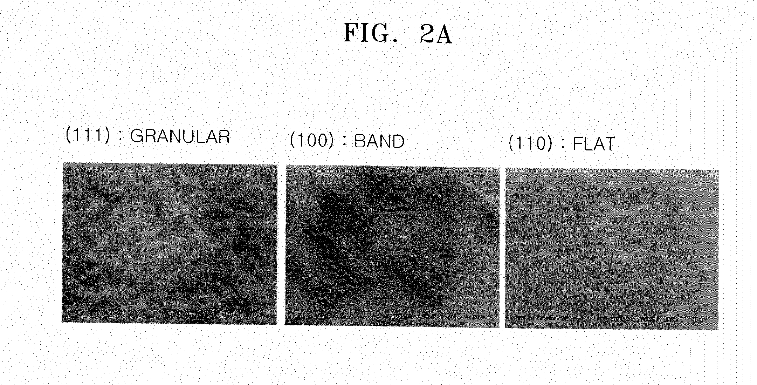

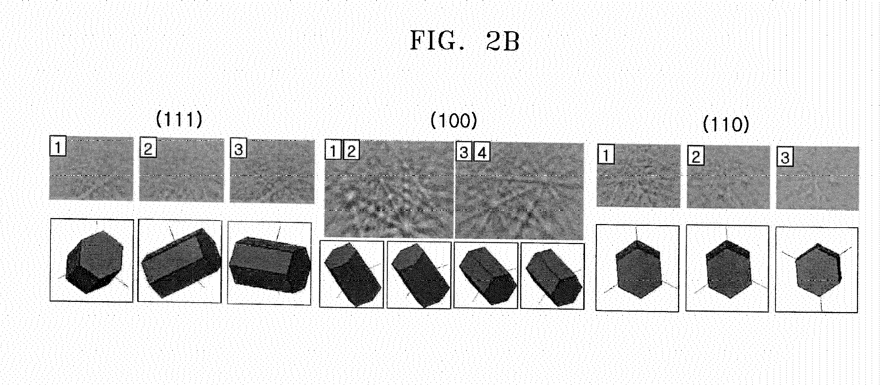

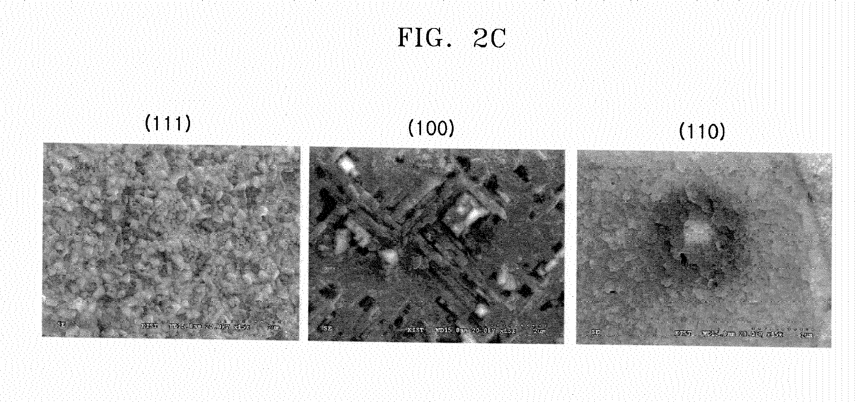

FIGS. 2A, 2B, and 2C are scanning electron microscope (SEM) images and EBSD pattern from the same site of chromium oxide layers formed on the surface of the oxidation-resistant ferritic stainless steel according to an embodiment of the present invention, according to grain orientations.

FIG. 2A shows SEM images of chromium oxide layers formed by heat-treating a ferritic stainless steel having a surface including about 5% or more of the {110} grain orientation at about 650°C for about 1 hour. FIG. 2A shows a chromium oxide layer formed on a {111} grain plane, a chromium oxide layer formed on a {100} grain plane, and a chromium oxide layer formed on a {110} grain plane of the surface of the ferritic stainless steel, sequentially from left to right. The chromium oxide layer formed on the {111} grain plane has a granular structure, the chromium oxide layer formed on the {100} grain plane has a band structure, and the chromium oxide layer formed on the {110} grain plane has a flat structure.

FIG. 2B shows grain orientations measured in chromium oxide layers formed on the surface of the ferritic stainless steel. FIG. 2B shows a chromium oxide layer formed on the {111} grain plane, a chromium oxide layer formed on the {100} grain plane, and a chromium oxide layer formed on the {110} grain plane, sequentially from left to right. In the chromium oxide layer formed on the {111} grain plane of the surface of ferritic stainless steel, grains have different orientations. In the chromium oxide layer formed on the {100} grain plane, grains in the same band have the same orientation. In the chromium oxide layer formed on the {110} grain plane, grains all have the same orientation.

The chromium oxide layer formed on the {111} grain plane has low-level density since grains of the chromium oxide layer have random orientations, the chromium oxide layer formed on the {100} grain plane has mid-level density since grains of the chromium oxide layer have two orientations, and the chromium oxide layer formed on the {110} grain plane has high-level density since grains of the chromium oxide layer have the same orientation. For example, a grain orientation of the chromium oxide layer formed on grains having the {110} grain orientation of the surface of the ferritic stainless steel may be {00.1} which is the closed packed plane of chromium oxide. In other words, the density of the chromium oxide layer formed on the surface of the ferritic stainless steel according to an embodiment of the present invention may be influenced by the grain orientations of the surface of the ferritic stainless steel.

FIG. 2C shows SEM images of chromium oxide layers formed by heat-treating a ferritic stainless steel having a surface including about 5% or more of the {110} grain orientation at about 800°C for about 10 minutes. FIG. 2C shows a chromium oxide layer formed on the {111} grain plane, a chromium oxide layer formed on the {100} grain plane, and a chromium oxide layer formed on the {110} grain plane, sequentially from left to right. FIG. 2C shows similar results to those shown in FIG. 2A. That is, the chromium oxide layer formed on the {111} grain plane has a granular structure, the chromium oxide layer formed on the {100} grain plane has a band structure, and the chromium oxide layer formed on the {110} grain plane has a flat structure. The SEM images shown in FIG. 2C show clearer structures of the chromium oxide layers than the SEM images shown in FIG. 2A due to the heat-treatment at a higher temperature.

The thickness of the chromium oxide layer formed on the surface of the ferritic stainless steel according to an embodiment of the present invention may be in a range of about 1 nm to about 10 *µ*m. If the thickness of the chromium oxide layer is within this range, the density of the chromium oxide layer may be sufficiently high.

For example, the chromium oxide layer may be a Cr₂0₃ scale suitable for operation conditions of a fuel cell.

If the ferritic stainless steel is heat-treated at a temperature from about 500°C to about 900°C for about 5 minutes and further heat-treated at a temperature from about 500°C to about 900°C for about 30 minutes to about 2 hours, a spinel oxide layer is formed on the chromium oxide layer having the {110} grain orientation.

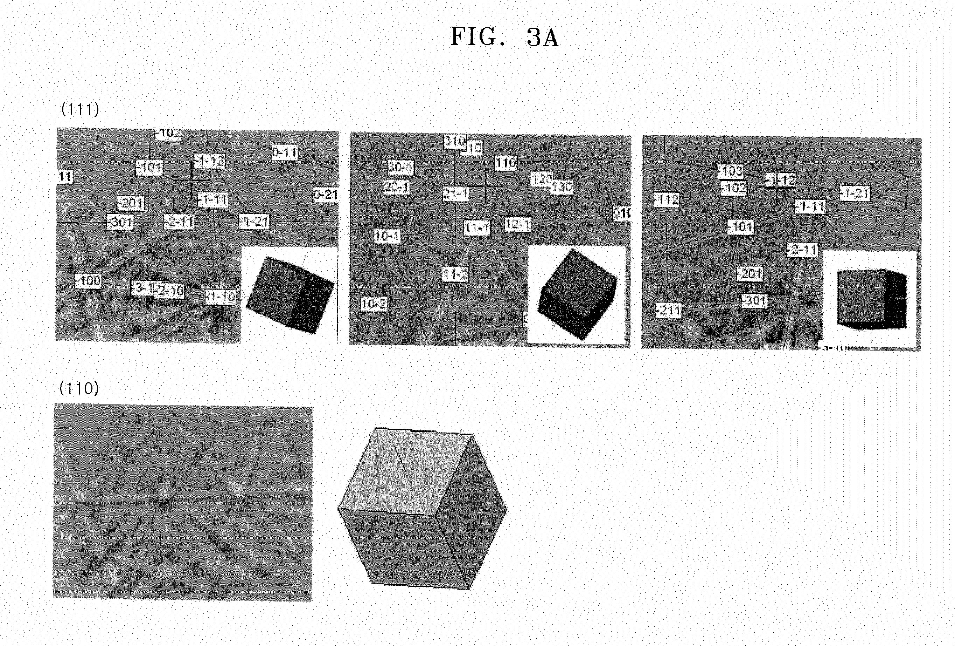

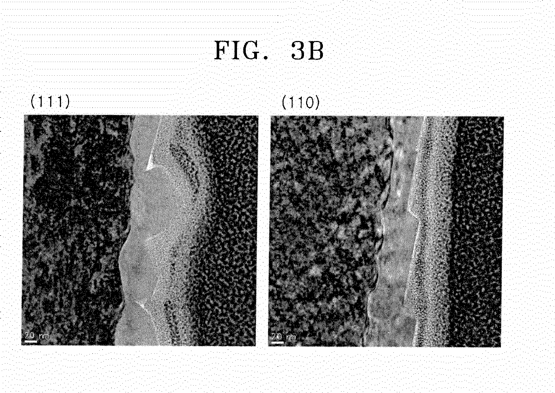

FIGS. 3A and 3B are transmission electron microscope (TEM) images of spinel oxide layers according to grain orientations.

In particular, FIG. 3A shows images of spinel oxide layers formed by heat-treating a ferritic stainless steel having a surface including about 5% or more of the {110} grain orientation at about 800°C for about 1 hour, obtained using EBSD. A spinel oxide layer has a denser structure when it formed on a chromium oxide layer formed on the surface of the ferritic stainless steel having the {110} grain orientation. Referring to FIG. 3A, a spinel oxide layer formed on a chromium oxide layer formed on the {111} grain plane has random orientations, and a spinel oxide layer formed on a chromium oxide layer formed on the {110} grain plane has the {111} grain orientation.

The spinel oxide layer formed on the chromium oxide layer formed on the {111} matrix grain plane has low-level density since grains of the spinel oxide layer have random orientations, and the spinel oxide layer formed on the chromium oxide layer formed on the {110} matrix grain plane has high-level density since the spinel oxide layer has the {111} grain orientation which is the closed packed plane of spinel oxide. That is, it is considered that the grain orientation of the chromium oxide layer formed on the surface of the ferritic stainless steel according to an embodiment of the present invention influences a grain orientation and density of the spinel oxide layer formed on the chromium oxide layer.

For example, the spinel oxide layer may be a Cr₂Mn0₄ scale suitable for operation conditions of a fuel cell.

Thus, with the controlling of the grain orientations of the surface of the ferritic stainless steel the density of the chromium oxide layer as well as the density of the spinel oxide layer may increase, and thus the ferritic stainless steel may have excellent oxidation resistance. On the other hand, if the controlling of grain orientations of the surface of the ferritic stainless steel fails, the chromium oxide layer as well as the spinel oxide layer formed on the chromium oxide layer has random grain orientations. It decrease the density of both oxide layers and thus oxidation resistance of the ferritic stainless steel may deteriorate.

FIG. 3B shows transmission electron microscope (TEM) images of spinel oxide layers. Density of a spinel oxide layer formed on a chromium oxide layer formed on the {110} grain plane of the surface of the ferritic stainless steel is greater than that of a spinel oxide layer formed on a chromium oxide layer formed on the {111} grain plane.

Since the ferritic stainless steel forms an oxide layer having high density and excellent conformability, external diffusion of metal ions during heat-treatment decreases. As a result, oxidation resistance of the ferritic stainless steel is improved. In addition, since the oxide layer has high density, electrical conductivity of the oxide layer increases.

A method of manufacturing an oxidation-resistant ferritic stainless steel according to an embodiment of the present invention includes: a first step of providing a Cr-containing ferritic stainless steel having a surface that includes about 5% or more of the {110} grain orientation as measured using EBSD; and a second step of forming a chromium oxide layer on the surface of the ferritic stainless steel by heat-treating the ferritic stainless steel at a temperature in a range of about 500°C to about 900°C for about 5 minutes to about 200 hours.

The content of Cr of the ferritic stainless steel may be in a range of about 20 to 30% by weight of the ferritic stainless steel. If the content of Cr is within this range, the ferritic stainless steel may have desirable corrosion resistance, processability, and manufacturability.

For example, the ferritic stainless steel may have the following composition. The ferritic stainless steel may include about 20 to 30% by weight of Cr, about 0.005 to 0.05% by weight of Al, about 0.01 to 0.6% by weight of Mn, about 0.005 to 0.1% by weight of Ti, about 0.002 to 0.03% by weight of C, about 0.001 to 0.02% by weight ofN, and about 0.01 to 0.2% by weight of La, and the rest of the ferritic stainless steel may be Fe and inevitable impurities.

In the first step, the ferritic stainless steel including Cr and having a surface that includes about 5% or more of the {110} grain orientation is provided. Preferably, the {110} grain orientation fraction may be about 30% or more, and more preferably, the {110} grain orientation fraction may be about 45% or more. For example, if the {110} grain orientation fraction is about 45% or more, the weight of the oxide layer of the oxidation-resistant ferritic stainless steel may be reduced by about 50% compared to when the {110} grain orientation fraction is about 5% or less.

In the first step, since the {110} grain orientation forms a denser oxide layer than the {100} grain orientation and the {111} grain orientation, by controlling the grain orientations, the ferritic stainless steel may be provided having a greater amount of grains having the {110} grain orientation than grains having the {100} grain orientation and the {111} grain orientation.

In the first step, an average grain size formed on the surface of the ferritic stainless steel may be in a range of about 5 *µ*m to about 100 *µ*m. If the average grain size is within this range, grains having the {110} grain orientation, the {100} grain orientation, and the {111} grain orientation are mainly formed on the surface of the ferritic stainless steel.

In the second step, the ferritic stainless steel is heat-treated to form the chromium oxide layer on the surface of the ferritic stainless steel. For example, the second step may be performed by heat-treating the ferritic stainless steel at a temperature in a range of about 500°C to about 900°C for about 5 minutes to about 2 hours.

By the heat-treatment, the chromium oxide layer is formed on the surface of the ferritic stainless steel. If the ferritic stainless steel is further heat-treated, a spinel oxide layer may be formed on the chromium oxide layer. For example, if the ferritic stainless steel is heat-treated at about 800°C for about 1 hour, the chromium oxide layer is formed, and then the spinel oxide layer is formed thereon.

A fuel cell interconnector according to an embodiment of the present invention includes the oxidation-resistant ferritic stainless steel described above. The oxidation-resistant ferritic stainless steel prepared according to an embodiment of the present invention has excellent oxidation resistance and high electrical conductivity due to the heat-treatment conditions. Since oxidation resistance and electrical conductivity are important characteristics required for an interconnector of a fuel cell, the oxidation-resistant ferritic stainless steel may be efficiently used as a fuel cell interconnector.

A fuel cell according to an embodiment of the present invention includes a unit cell including an anode, an electrolyte, and a cathode, and a fuel cell interconnector, wherein the fuel cell interconnector may be as described above.

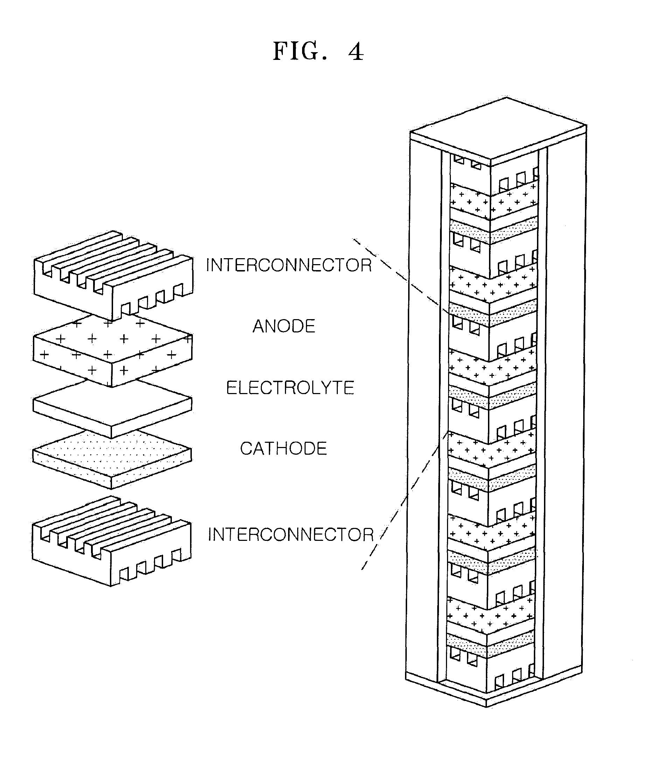

Referring to FIG. 4, the fuel cell has a stack structure in which a unit cell including an anode, an electrolyte, and a cathode and a fuel cell interconnector are stacked. In this regard, the interconnector functions as a linking member that connects each of a plurality of the unit cells and a separation plate that separate a fuel and air applied from the fuel cell. The interconnector of the fuel cell requires high electrical conductivity, excellent oxidation resistance, and a thermal expansion rate similar to the other portions of the fuel cell at an operation temperature of about 800°C. Thus, the oxidation-resistant ferritic stainless steel according to the present invention may be used as a fuel cell interconnector.

Hereinafter, oxidation-resistant ferritic stainless steels according to one or more embodiments of the present invention will be described in detail with reference to the following examples. These examples are not intended to limit the purpose and scope of the one or more embodiments of the present invention.

### Examples

### Example 1

A ferritic stainless steel including a large amount of Cr was used as a sample. A composition of the ferritic stainless steel is Fe-23Cr-0.02Al-0.4Mn-0.05Ti-0.002C-0.09La.

The ferritic stainless steel was vacuum induction melted, and homogenized at 1200°C for 24 hours by heat-treatment, forged at 1200°C to a thickness of 37 mm, and hot-rolled at 1150°C (50% hot-rolling) to prepare a sample.

{110}, {100}, and {111} grain orientation fractions of the prepared sample (panel) were measured using EBSD. Then, mass gain thereof over time was measured while heat-treating the sample at 800°C for 500 hours.

### Example 2

A sample having the same composition as in Example 1 was used.

The ferritic stainless steel was vacuum induction melted, and homogenized at 1200°C for 24 hours by heat-treatment, forged at 1200°C to a thickness of 37 mm, hot-rolled at 1150°C (50% hot-rolling), cold-rolled at room temperature (80% cold-rolling), and heat-treated at 800°C for 1 hour for recrystallization.

{110}, {100}, and {111} grain orientation fractions of the prepared sample (panel) were measured using EBSD. Then, mass gain thereof over time was measured while heat-treating the sample at 800°C for 500 hours.

### Comparative Example 1

A sample was obtained in the same manner as in Example 2, except that the cold-rolling and heat-treatment were not performed.

{110}, {100}, and {111} grain orientation fractions of the prepared sample (panel) were measured using EBSD. Then, mass gain thereof over time was measured while heat-treating the sample at 800°C for 500 hours.

### Comparative Example 2

A sample was obtained in the same manner as in Example 2, except that the hot-rolling was not performed.

{110}, {100}, and {111} grain orientation fractions of the prepared sample (panel) were measured using EBSD. Then, mass gain thereof over time was measured while heat-treating the sample at 800°C for 500 hours.

### Evaluation Example

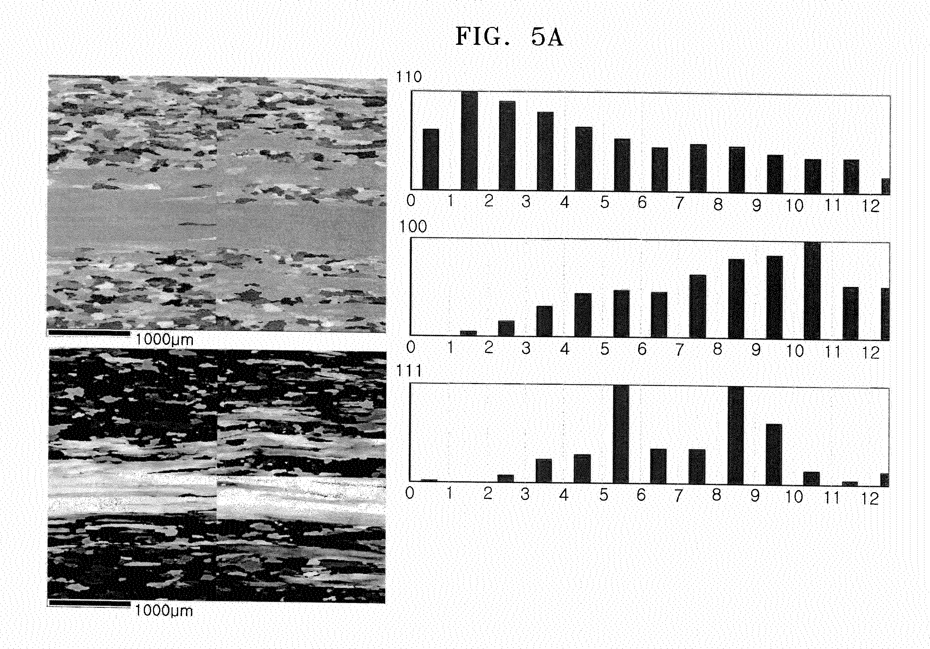

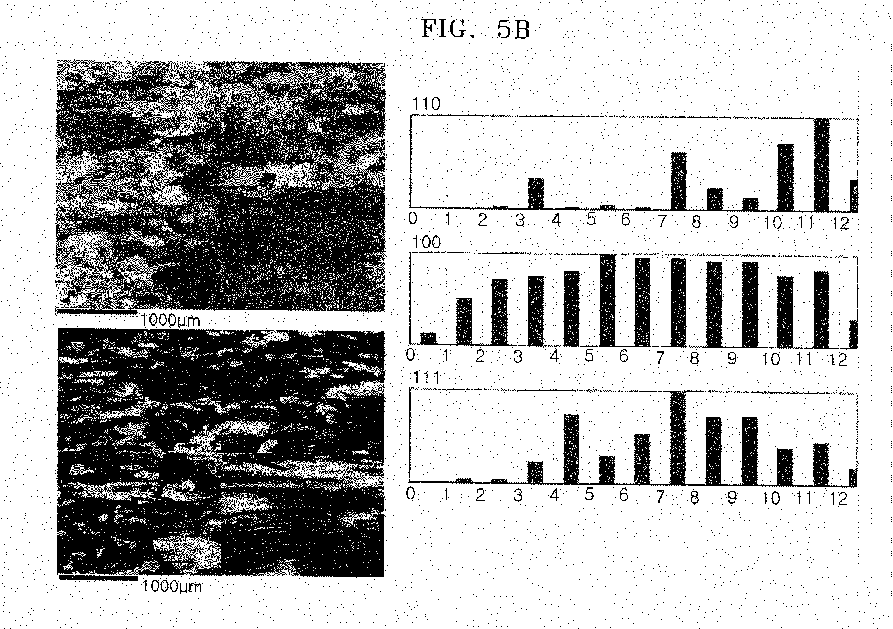

FIGS. 5A and 5B are graphs respectively illustrating grain orientation fractions of surfaces of oxidation-resistant ferritic stainless steels prepared according to Example 1 and Comparative Example 1. A horizontal axis of each graph indicates an angle deviated from a grain orientation and a vertical axis indicates intensity. A grain plane having an angle deviated from a grain orientation by up to 12.5° was regarded as having that specific grain orientation. Referring to FIGS. 5A and 5B, the oxidation-resistant ferritic stainless steel prepared according to Example 1 had 47.4% of the {110} grain orientation, 8.9% of the {100} grain orientation, and 1.6% of the {111} grain orientation, and the ferritic stainless steel prepared according to Comparative Example 1 had 2.1 % of the {110} grain orientation, 52.9% of the {100} grain orientation, and 3.6% of the {111} grain orientation. The {110} grain orientation fraction of the oxidation-resistant ferritic stainless steel prepared according to Example 1 was far greater than that of the {110} grain orientation of the ferritic stainless steel prepared according to Comparative Example 1.

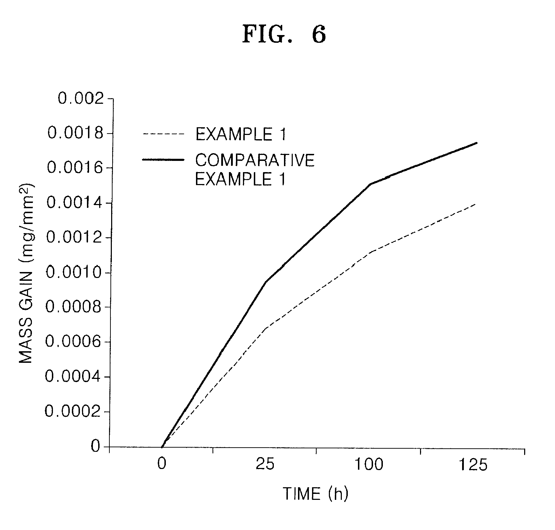

FIG. 6 is a graph illustrating mass gain of oxide layers of ferritic stainless steels prepared according to Example 1 and Comparative Example 1 over time at 800°C. Referring to FIG. 6, the mass gain of the oxide layer of the oxidation-resistant ferritic stainless steel prepared according to Example 1 was less than that of the ferritic stainless steel prepared according to Comparative Example 1 over time. In other words, since the ferritic stainless steel having 47.4% of the {110} grain orientation prepared according to Example 1 had better oxidation resistance than the ferritic stainless steel having 2.1 % of the {110} grain orientation prepared according to Comparative Example 1, the mass gain of the oxide layer of the ferritic stainless steel prepared according to Example 1 was less than that of the ferritic stainless steel prepared according to Comparative Example 1.

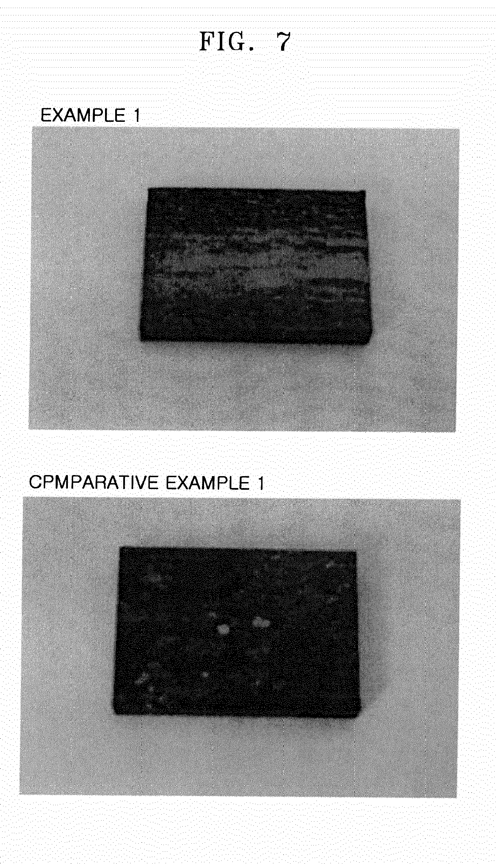

FIG. 7 shows photographs of ferritic stainless steels prepared according to Example 1 and Comparative Example 1 to compare oxidation degrees thereof. Referring to FIG. 7, the ferritic stainless steel prepared according to Example 1 shows a larger bright portion at its center than the ferritic stainless steel prepared according to Comparative Example 1. Accordingly, it can be identified that the center of the ferritic stainless steel prepared according to Example 1 had a greater amount of the {110} grain orientation, which is oxidized less than other grain orientations, compared to the ferritic stainless steel prepared according to Comparative Example 1.

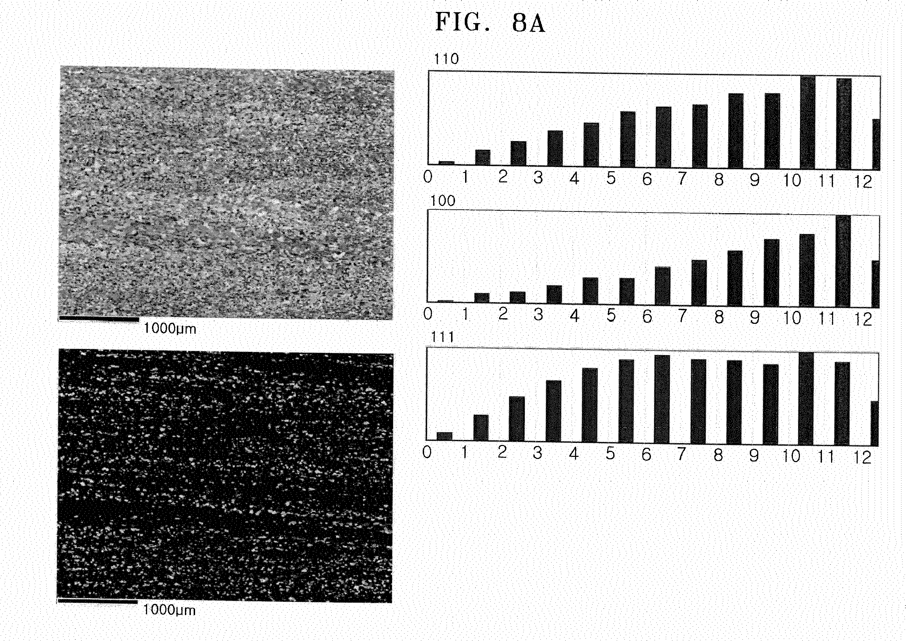

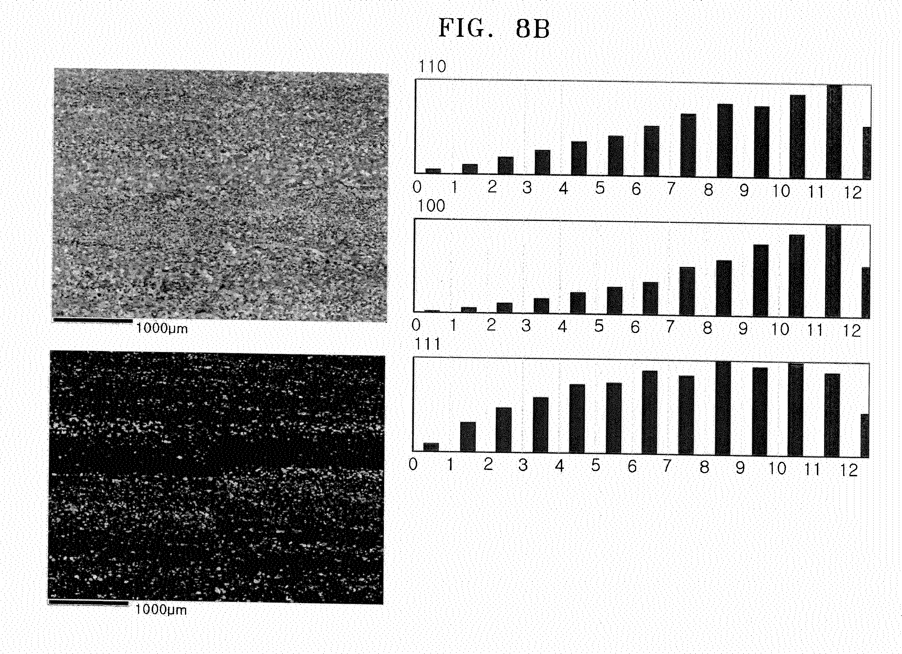

FIGS. 8A and 8B are graphs respectively illustrating grain orientation fractions of surfaces of oxidation-resistant ferritic stainless steels prepared according to Example 2 and Comparative Example 2. Referring to FIGS. 8A and 8B, the oxidation-resistant ferritic stainless steel prepared according to Example 2 had 6.5% of the {110} grain orientation, 6.7% of the {100} grain orientation, and 7.3% of the {111} grain orientation, and the ferritic stainless steel prepared according to Comparative Example 2 had 3.0% of the {110} grain orientation, 8.1 % of the {100} grain orientation, and 8.4% of the {111} grain orientation. The {110} grain orientation fraction of the oxidation-resistant ferritic stainless steel prepared according to Example 2 was greater than that of the {110} grain orientation of the ferritic stainless steel prepared according to Comparative Example 2.

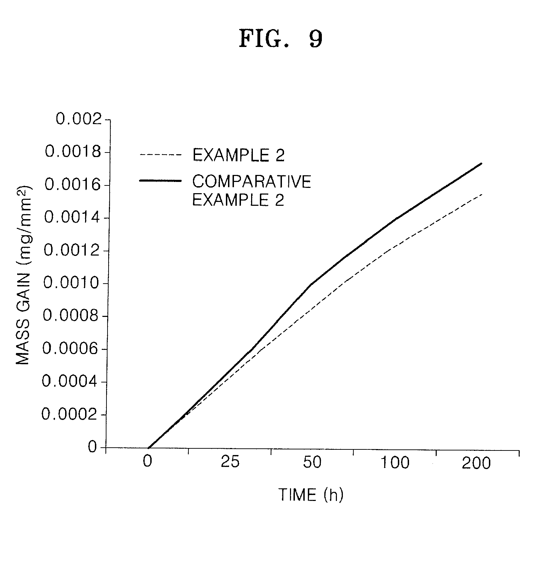

FIG. 9 is a graph illustrating mass gain of oxide layers of ferritic stainless steels prepared according to Example 2 and Comparative Example 2 over time at 800°C. Referring to FIG. 9, the mass gain of the oxide layer of the oxidation-resistant ferritic stainless steel prepared according to Example 2 was less than that of the ferritic stainless steel prepared according to Comparative Example 2 over time. In other words, since the ferritic stainless steel having 6.5% of the {110} grain orientation prepared according to Example 2 had better oxidation resistance than the ferritic stainless steel having 3.0% of the {110} grain orientation prepared according to Comparative Example 2, the mass gain of the oxide layer of the ferritic stainless steel prepared according to Example 2 was less than that of the ferritic stainless steel prepared according to Comparative Example 2.

The oxidation-resistant ferritic stainless steel according to the present invention has a surface including a dense oxide layer in which grain orientations are controlled, and thus has high electrical conductivity and excellent oxidation resistance. In particular, the oxidation-resistant ferritic stainless steel according to the present invention may be applied to a fuel cell interconnector so that a fuel cell having excellent oxidation resistance and high electrical conductivity may be provided.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An oxidation-resistant ferritic stainless steel comprising:
a ferritic stainless steel comprising Cr, wherein a {110} grain orientation fraction of a surface of the ferritic stainless steel as measured using electron back scattered diffraction pattern (EBSD) is about 5% or more; and
a chromium oxide layer formed on the surface of the ferritic stainless steel.

2. The oxidation-resistant ferritic stainless steel of claim 1, wherein the {110} grain orientation fraction is about 30% or more.

3. The oxidation-resistant ferritic stainless steel of claim 1, wherein a content of Cr is in a range of about 20 to 30% by weight.

4. The oxidation-resistant ferritic stainless steel of claim 1, wherein an average grain size of grains of the surface of the ferritic stainless steel is in a range of about 5 *µ*m to about 100 *µ*m.

5. The oxidation-resistant ferritic stainless steel of claim 1, wherein the chromium oxide layer formed on grains having the {110} grain orientation of the surface of the ferritic stainless steel have the same grain orientation.

6. The oxidation-resistant ferritic stainless steel of claim 1, wherein a grain orientation of the chromium oxide layer formed on grains having the {110} grain orientation of the surface of the ferritic stainless steel is {00.1}.

7. The oxidation-resistant ferritic stainless steel of claim 1, wherein the chromium oxide layer is a Cr₂O₃ layer.

8. The oxidation-resistant ferritic stainless steel of claim 1, wherein a thickness of the chromium oxide layer is in a range of about 1 nm to about 10 *µ*m.

9. The oxidation-resistant ferritic stainless steel of claim 1, further comprising a spinel oxide layer formed on the chromium oxide layer formed on grains having the {110} grain orientation of the surface of the ferritic stainless steel.

10. The oxidation-resistant ferritic stainless steel of claim 9, wherein the spinel oxide layer has a {111} grain orientation.

11. The oxidation-resistant ferritic stainless steel of claim 9, wherein the spinel oxide layer is a Cr₂Mn0₄ oxide layer.

12. A method of manufacturing the oxidation-resistant ferritic stainless steel, the method comprising:
providing a Cr-containing ferritic stainless steel having a surface that has about 5% or more of a {110} grain orientation fraction as measured using electron back scattered diffraction pattern (EBSD); and
forming a chromium oxide layer on the surface of the ferritic stainless steel by heat-treating the ferritic stainless steel at a temperature in a range of about 500°C to about 900°C for about 5 minutes to about 200 hours.

13. The method of claim 12, wherein the {110} grain orientation fraction is about 30% or more in the providing.

14. A fuel cell interconnector comprising the oxidation-resistant ferritic stainless steel according to claim 1.

15. A fuel cell comprising:
a unit cell comprising an anode, an electrolyte, and a cathode; and
the fuel cell interconnector according to claim 19 for connecting a plurality of the unit cells.
